# EUROPEAN PATENT SPECIFICATION

(11) **EP 2 530 396 B1**
(45) Date of publication and mention of the grant of the patent: **09.08.2017**
(21) Application number: 11382181.3
(22) Date of filing: 01.06.2011
(51) Int. Cl.: F24F 11/047, F24F 13/14, F16K 1/22

(54) **Constant flow regulator mechanism**
Volumenstromregler
Valve de régulation de débit d'air

(43) Date of publication of application: 05.12.2012
(73) Proprietor: Koolair, S.A., 28936 Mostoles (Madrid) (ES)
(72) Inventor: Susarte Torrijos, José, Tomás, 28936 MOSTOLES (Madrid) (ES)
(74) Representative: Carpintero Lopez, Francisco

(56) References cited:
- EP-A1- 2 028 428
- EP-A2- 0 805 300
- EP-A2- 1 840 477
- FR-A- 1 313 310
- GB-A- 1 269 277

## Description

### Technical Field of the Invention

The present invention corresponds to the technical field of air conditioning and ventilation installations, specifically to those regulator elements for the air circulation flow both in systems in which extraction is performed and in which the drive thereof is performed.

### Background of the Invention

There are currently various constant flow regulator mechanisms.

All of them use a casing which is coupled by means of some type of gasket to the conduit of the installation and which has therein a rotary valve with at least one flap which, according to its position, generates a larger or smaller opening of the conduit, allowing the passage of a certain air flow, and which is connected to a mechanism which allows regulating said opening such that the flow is constant and is the desired one.

This mechanism is located in the outer part of the casing, normally secured to a support plate.

The reference specifications ES 2083798-T3 and ES 2334107-T3 can be mentioned as a specific example of constant flow regulation mechanisms existing in the state of the art.

In the first of them, ES 2083798-T3, the invention consists of a flow regulator with a mechanism formed by a leaf spring attached at one end to a lever and at other end to a cam disk with a device for fixing same, such that when the cam disk is moved around a rotation point, the leaf spring is entrained by the cam disk and curves on the cam. The torsion torque on the valve is thus compensated by means of the spring.

To that end, it is necessary for the spring to be especially calibrated for each regulator.

On the other hand, reference specification ES 2334107-T3 described another type of flow regulator formed by a butterfly valve inside the casing with a spring element secured to a rod traversing the casing in a lever arm secured to the butterfly valve, such that during the rotation of the valve, from the closed position to the open position, said spring is gradually tensioned.

The lever arm emerging to the exterior contains a sleeve and a thread with a part which allows adjusting the pretensioning of the spring element so that the air flow traversing the conduit is the desired one.

In both cases, the valve regulation mechanism which will allow the passage of a certain air flow has a certain constructive complication. Furthermore, in the case of the first mentioned specification, the spring is required to be specifically calibrated for each regulator, which complicates the process even more and at the same time makes it more expensive, since the production of the regulators must consist of an individualized process in each specific case.

Likewise, in the second specification, the fact that part of the regulation mechanism is inside the casing, next to the butterfly valve, complicates the tasks of repairing and replacing parts, if there is any breakdown of the mechanism.

Finally, the patent application GB1269277 A discloses a regulator for gas currents, according to the preamble of claim 1, in particular those of high-pressure air-conditioning installations, which keeps the rate of flow of gas at a constant independent from the pressure either at the inlet or outlet side.

### Description of the Invention

The constant flow regulator mechanism proposed herein corresponds to those formed by a casing having therein a rotary valve with at least one flap such that, according to the position adopted by the latter, the passage of a certain constant flow is allowed, and by a plate of mechanisms.

Said plate of mechanisms, in the invention presented herein, comprises at least one strip secured at one of its ends to a strip support and at the other end to a spacer element between the strip and a multipositional element.

The strip support is in turn fixed to a spindle for the advance and tensioning of the strip. The strip support is preferably made of plastic material.

This spindle comprises manual activation means which allow varying, from outside the flow regulator mechanism, the opening position of the at least one flap of the inner valve of the casing.

The spacer element between the strip and the multipositional element has a longitudinal shape and means of connection to both elements, at the ends.

The multipositional element has a rotation shaft which is connected through the plate to the drive shaft of the at least one flap of the inner valve of the casing, such that it regulates the degree of opening and closing thereof.

This multipositional element is connected to at least one damper for reducing the possible vibrations of the mechanism and comprises holes in its sides for regulating the connection with the spacer element and with said damper.

The material for making this multipositional element as well as the spacer element is preferably of a metallic nature.

The mechanism in turn comprises means for securing the strip to the strip support, which means can be screwing elements or any other means providing the securing.

The plate of mechanisms preferably has a rectangular shape and is placed against a side of the casing of the regulator.

Thus, with this regulator mechanism proposed herein, the regulation thereof is externally performed by means of operating the activation means comprised by the spindle itself.

Thus, by means of the rotation generated in the spindle there is a movement of the strip support in one direction or the other on the spindle, obtaining a certain tensioning of the strip which at the same time stretches or pushes the spacer element which in turn modifies the position of the multipositional element.

The latter, connected to the drive shaft of the valve, determines the degree of opening thereof.

Likewise, the plate of mechanisms comprises a closing lid having a graduation or indicator of the air flow which passes according to the degree of opening of the valve, and on the other hand the strip support comprises on its front face marking means for marking the position thereof, visible from the outside, such that according to the movement towards one side or the other of the strip support on the spindle, the opening which is obtained of the inner valve and the passing air flow is shown by these means in said graduation, in order to set the required air flow.

The constant flow regulator mechanism proposed herein is more advantageous than those existing in the state of the art from the point of view of simplicity, since this regulator achieves the regulation of the opening of the at least one flap of the inner rotary valve easily, quickly and outside the mechanism itself, without the drawbacks of having to specifically calibrate the spring in each case, whereby the process for preparing the regulators is made quicker and simpler. This in turn provides a cost reduction of the process.

All the elements of the mechanism are outside the casing in which the valve with the at least one flap is located and are placed on the plate of mechanisms. This involves an important advantage in terms of the ease and speed of the repairs and replacement of parts over several of the regulators existing in the state of the art in which some part of the mechanism is inside the casing.

### Brief Description of the Drawings

For the purpose of aiding to better understand the features of the invention according to a preferred practical embodiment thereof, a series of drawings is provided as an integral part of said description, in which the following has been depicted with an illustrative and non-limiting character:
Figure 1 shows a plan view of a plate of mechanisms for this constant flow regulator mechanism.
Figure 2 shows a perspective view of the constant flow regulator mechanism with the plate of mechanisms covered with the closing lid.
Figure 3 shows an elevational view of the constant flow regulator mechanism with the plate of mechanisms covered with the closing lid.

### Detailed Description of a Preferred Embodiment of the Invention

In view of the provided figures, it can be observed how in a preferred embodiment of the invention, the constant flow regulator mechanism proposed herein is of the type formed by a casing inside which it has a rotary valve which in this example of the invention has a single flap, and by a plate of mechanisms.

According to the opening position of the flap inside the casing, the passage of a certain constant flow is allowed.

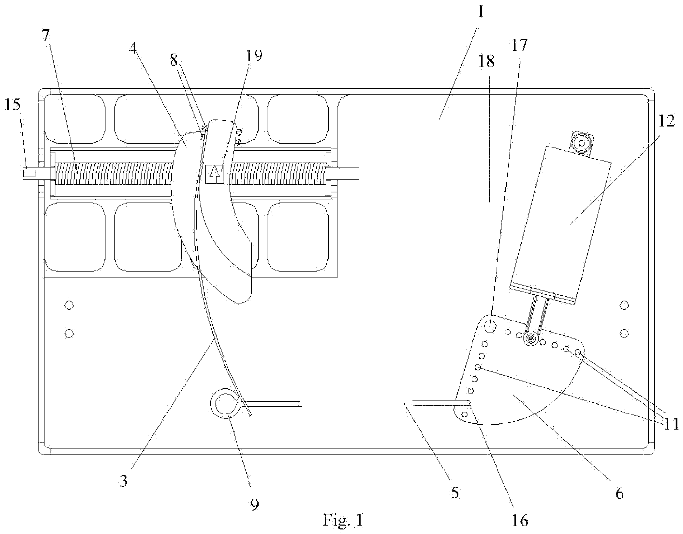

As can be observed in Figures 1, 2 and 3, the plate (1) of mechanisms proposed in this preferred example of the invention, which has a rectangular shape and is placed against a side of the casing (10), comprises at least one strip (3) secured at one of its ends to a strip support (4) and at the other end to a spacer element (5) between the strip (3) and a multipositional element (6).

The strip support (4) is made with plastic material and can move along a spindle (7) for setting the desired tensioning of the strip (3). The means for securing the strip (3) to said strip support (4) comprise at least two fixing elements (8) in this preferred example of the invention.

The spindle (7) in turn has manual activation means which in this preferred example of the invention comprise a head (15) in the prolongation of the longitudinal shaft of the spindle (7) to the outside of the plate, such that the opening position of the flap (2) of the valve inside the casing (10) can be modified from outside the mechanism.

On the other hand, the spacer element (5) between the strip (3) and the multipositional element (6) has a longitudinal shape and is made with metallic material. It comprises at its ends means of connection to these elements.

Thus, the means of connection of the spacer element (5) to the strip (3) at one its ends comprise a stop (9) formed by a curved widening of the end itself of the spacer element (5), whereas the means of connection of the other end of the spacer element (5) to the multipositional element (6) comprise a securing hook (16) formed by the end of the spacer element (5).

The multipositional element (6), which in this preferred example of the invention is of a metallic material, has as a rotation shaft (17) the drive shaft (18) itself of the flap (2) of the rotary valve inside the casing (10), through the plate (1) of mechanisms itself, such that it regulates the rotation of the flap (2) of the valve to reach the desired opening thereof, and at the same time it prevents its movements once the opening is set.

The multipositional element (6) comprises holes (11) in its sides to enable regulating the connection with the spacer element (5) as well as with a damper (12) to which it is connected to reduce the possible vibrations of the mechanism.

The regulation of this constant flow regulator mechanism proposed in this preferred embodiment of the invention is performed by the activation means comprised in the spindle (7) itself, which as has been indicated have a head (15) in the prolongation of its longitudinal shaft to the outside of the plate (1) of mechanisms.

When said head (15) is activated, the rotation of the spindle (7) is generated, which causes the movement towards one direction or the other of the strip support (4), whereby a certain tensioning of the strip (3) is generated which in turn stretches or pushes the spacer element (5) which in turn modifies the position of the multipositional element (6).

Since the latter is connected to the drive shaft (18) of the valve, it determines its degree of opening.

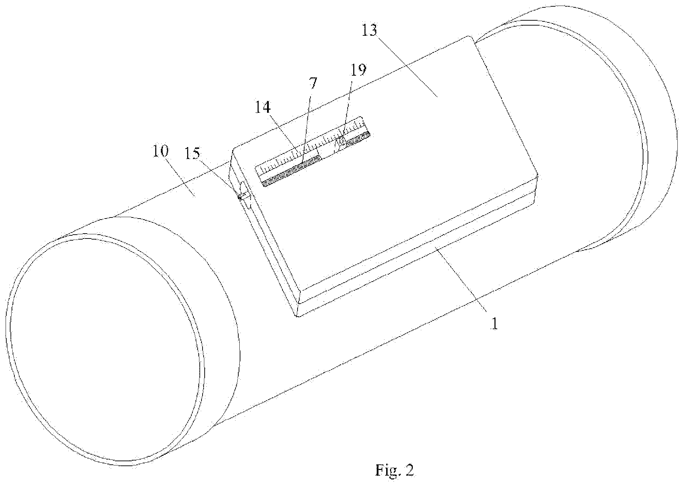

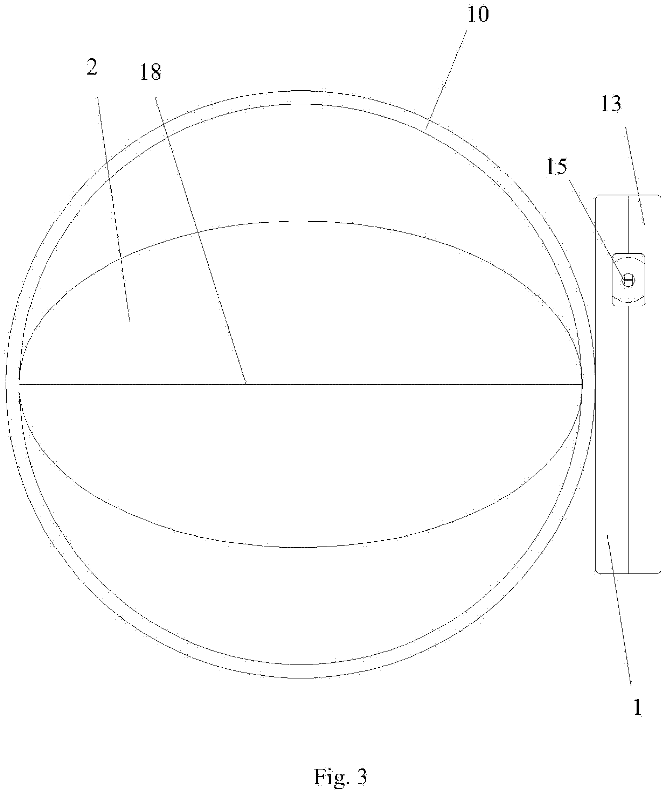

As observed in Figures 2 and 3, the plate (1) of mechanisms comprises a closing lid (13) with a graduation (14) or indicator of the air flow which passes according to the degree of opening of the valve. The strip support (4) in turn comprises on its front face, a pointer (19) visible from the outside which, upon moving with the strip support (4), determines the position thereof.

Thus, according to the movement towards one side or the other of the strip support (4) on the spindle (7), said pointer (19) marks on the graduation (14) of the closing lid (13) the opening of the valve as well as the corresponding passing flow, depending on the position of the strip support.

The constant flow regulator mechanism presented in this preferred example of the invention has several advantages with respect to those existing in the state of the art.

It is thus much easier to handle, both mechanically and manually, since its activation is performed with the operation of a head outside the plate of mechanisms, which generates the movement of the elements thereof, interconnected to one another, such that with the rotation of this head the movement of the flap of the rotary valve to the desired degree of opening is achieved. Furthermore, since there is an outer graduation in the closing lid of the plate of mechanisms, the degree of opening and passing air flow to which the position of the flap of the valve set in each case corresponds are fully shown.

A simple regulation of the flow and furthermore a quick, easy and convenient knowledge of the passing flow are therefore achieved.

Unlike what occurs in other regulators, it does not require a specific calibration of the spring for each case, whereby the process is simplified since it does not need an individualized manufacture thereof. This, on the other hand, reduces the cost for making the regulator.

On the other hand, since all the elements of the regulator mechanism, except the rotary valve, are located outside the casing and on a plate of mechanisms, it is very simple and quick to repair or replace a part in the event of a breakdown. It is furthermore easy to move the mechanism since everything is included in the plate of mechanisms.

## Claims

1. Constant flow regulator mechanism, of those which are formed by a casing (10) inside which a rotary valve with at least one flap (2) allows the passage of a certain constant flow, according to the position thereof, and by a plate (1) of mechanisms, said plate (1) of mechanisms comprising:
- a multipositional element (6) having a rotation shaft (17) coinciding with the drive shaft (18) of the at least one flap (2) of the valve, through the plate (1), for regulating its degree of opening,
- a damper (12) connected to the multipositional element (6), for reducing the possible vibrations of the mechanism,
**characterized in that** the plate (1) of mechanisms further comprises:
- at least one strip (3), secured at one end to a strip support (4) and at the other end to a spacer element (5) between the strip (3) and the multipositional element (6),
- a spindle (7) in which the strip support (4) is fixed, for the advance and tensioning of the strip (3), and which comprises manual activation means which allow varying the opening position of the at least one flap (2) of the inner valve of the casing (10), and
- a spacer element (5) connected on its ends with the strip (3) and the multipositional element (6), having a longitudinal shape and means of connection to both elements, at the ends thereof,
and wherein the multipositional element (6) comprises holes (11) in its sides for regulating the connection with the spacer element (5) and with the damper (12).

2. Constant flow regulator mechanism according to claim 1, **characterized in that** it comprises means for securing the strip (3) to the strip support (4).

3. Constant flow regulator mechanism according to claims 1 and 2, **characterized in that** the means for securing the strip (3) to the strip support (4) comprise at least two fixing elements (8).

4. Constant flow regulator mechanism according to any of the previous claims, **characterized in that** the manual activation means of the spindle (7) comprise a head (15) in the prolongation of the longitudinal shaft of the spindle (7) to the outside of the plate (1) of mechanisms.

5. Constant flow regulator mechanism according to any of the previous claims, **characterized in that** the means of connection of the spacer element (5) to the strip (3) comprise a stop (9) formed by a curved widening of one of the ends of said spacer element (5).

6. Constant flow regulator mechanism according to any of the previous claims, **characterized in that** the means of connection of the spacer element (5) to the multipositional element (6) comprise a securing hook (16) formed by one of the ends of the spacer element (5) itself.

7. Constant flow regulator mechanism according to any of the previous claims, **characterized in that** it comprises a closing lid (13) having a graduation (14) or indicator of the air flow which passes according to the degree of opening of the valve.

8. Constant flow regulator mechanism according to claim 7, **characterized in that** the strip support (4) comprises on its front face marking means (19) for marking its position on the graduation of the closing lid (13), visible from the outside.

9. Constant flow regulator mechanism according to any of the previous claims, **characterized in that** the strip support (4) is of plastic material.

10. Constant flow regulator mechanism according to any of the previous claims, **characterized in that** the plate (1) has a rectangular shape.

11. Constant flow regulator mechanism according to any of the previous claims, **characterized in that** the multipositional element (6) is of a metallic nature.

12. Constant flow regulator mechanism according to any of the previous claims, **characterized in that** the spacer element (5) is of a metallic nature.

## Patentansprüche

1. Durchflussmengenreglermechanismus, der durch ein Gehäuse (10), in dem ein Drehventil mit mindestens einer Klappe (2) den Durchgang einer bestimmten konstanten Durchflussmenge gemäß einer Position der Klappe ermöglicht, und durch eine Platte (1) des Mechanismus gebildet wird, wobei die Platte (1) des Mechanismus aufweist:
ein Positionseinstellelement (6) mit einer Drehachse (17), die mit einer Antriebswelle (18) der mindestens einen Klappe (2) des Ventils übereinstimmt und sich durch die Platte (1) erstreckt, um den Öffnungsgrad der Klappe zu regeln; und
einen mit dem Positionseinstellelement (6) verbundenen Dämpfer (12) zum Vermindern möglicher Vibrationen des Mechanismus;
**dadurch gekennzeichnet, dass** die Platte (1) des Mechanismus aufweist:
mindestens einen Streifen (3), der an einem Ende an einem Streifenhalter (4) und am anderen Ende an einem sich zwischen dem Streifen (3) und dem Positionseinstellelement (6) erstreckenden Abstandselement (5) befestigt ist;
eine Spindel (7), an der der Streifenhalter (4) für eine Vorschubbewegung zum Spannen des Streifens (3) fixiert ist, wobei die Spindel eine manuelle Aktivierungseinrichtung aufweist, die eine Änderung der Öffnungsposition der mindestens einen Klappe (2) des Ventils im Gehäuse (10) ermöglicht; und
ein Abstandselement (5), das an seinen Enden mit dem Streifen (3) und mit dem Positionseinstellelement (6) verbunden ist und eine längliche Form hat und an seinen Enden Einrichtungen für eine Verbindung mit den beiden Elementen aufweist,
wobei das Positionseinstellelement (6) in seinen Seiten Löcher (11) zum Einstellen der Verbindung mit dem Abstandselement (5) und mit dem Dämpfer (12) aufweist.

2. Durchflussmengenreglermechanismus nach Anspruch 1, **dadurch gekennzeichnet, dass** der Mechanismus eine Einrichtung zum Befestigen des Streifens (3) am Streifenhalter (4) aufweist.

3. Durchflussmengenreglermechanismus nach Anspruch 1 oder 2, **dadurch gekennzeichnet, dass** die Einrichtung zum Befestigen des Streifens (3) am Streifenhalter (4) mindestens zwei Fixierelemente (8) aufweist.

4. Durchflussmengenreglermechanismus nach einem der vorangehenden Ansprüche, **dadurch gekennzeichnet, dass** die manuelle Aktivierungseinrichtung der Spindel (7) einen in der Verlängerung der Längswelle der Spindel (7) zur Außenseite der Platte (1) des Mechanismus angeordneten Kopf (15) aufweist.

5. Durchflussmengenreglermechanismus nach einem der vorangehenden Ansprüche, **dadurch gekennzeichnet, dass** die Einrichtung zum Verbinden des Abstandselements (5) mit dem Streifen (3) einen Anschlag (9) aufweist, der durch eine gebogene Erweiterung einer der Enden des Abstandelements (5) gebildet wird.

6. Durchflussmengenreglermechanismus nach einem der vorangehenden Ansprüche, **dadurch gekennzeichnet, dass** die Einrichtung zum Verbinden des Abstandselements (5) mit dem Positionseinstellelement (6) einen Befestigungshaken (16) aufweist, der durch eines der Enden des Abstandselements (5) selbst gebildet wird.

7. Durchflussmengenreglermechanismus nach einem der vorangehenden Ansprüche, **dadurch gekennzeichnet, dass** der Mechanismus einen Verschlussdeckel (13) mit einer Skaleneinteilung (14) oder einer Anzeige für die Luftdurchflussmenge aufweist, die gemäß dem Öffnungsgrad des Ventils hindurchströmt.

8. Durchflussmengenreglermechanismus nach Anspruch 7, **dadurch gekennzeichnet, dass** der Streifenhalter (4) auf seiner Vorderfläche eine von außen sichtbare Markierungseinrichtung (19) zum Markieren seiner Position auf der Skaleneinteilung des Verschlussdeckels (13) aufweist.

9. Durchflussmengenreglermechanismus nach einem der vorangehenden Ansprüche, **dadurch gekennzeichnet, dass** der Streifenhalter (4) aus einem Kunststoffmaterial besteht.

10. Durchflussmengenreglermechanismus nach einem der vorangehenden Ansprüche, **dadurch gekennzeichnet, dass** die Platte (1) eine rechteckige Form hat.

11. Durchflussmengenreglermechanismus nach einem der vorangehenden Ansprüche, **dadurch gekennzeichnet, dass** das Positionseinstellelement (6) aus einem metallischen Material besteht.

12. Durchflussmengenreglermechanismus nach einem der vorangehenden Ansprüche, **dadurch gekennzeichnet, dass** das Abstandselement (5) aus einem metallischen Material besteht.

## Revendications

1. Mécanisme régulateur de débit constant, de ceux qui sont formés par un boîtier (10) à l'intérieur duquel une vanne rotative avec au moins un volet (2) permet le passage d'un écoulement constant déterminé, en fonction de la position dudit volet (2), et par une plaque (1) de mécanismes, ladite plaque (1) de mécanismes comprenant :
- un élément multipositionnel (6) ayant un arbre de rotation (17) coïncidant avec l'arbre d'entraînement (18) de l'au moins un volet (2) de la vanne, à travers la plaque (1), pour réguler son degré d'ouverture,
- un amortisseur (12) connecté à l'élément multipositionnel (6) pour réduire les vibrations possibles du mécanisme,
**caractérisé en ce que** la plaque (1) de mécanismes comprend en outre :
- au moins une bande (3), fixée à une extrémité à un support de bande (4) et à l'autre extrémité à un élément d'espacement (5) entre la bande (3) et l'élément multipositionnel (6),
- une broche (7) dans laquelle le support de bande (4) est fixé, pour l'avance et la mise en tension de la bande (3), et qui comprend des moyens d'activation manuelle qui permettent de faire varier la position d'ouverture de l'au moins un volet (2) de la vanne intérieure du boîtier (10), et
- un élément d'espacement (5) connecté à ses extrémités à la bande (3) et à l'élément multipositionnel (6), présentant une forme longitudinale et des moyens de connexion aux deux éléments, aux extrémités de ceux-ci,
et où l'élément multipositionnel (6) comprend des trous (11) dans ses côtés pour réguler la connexion avec l'élément d'espacement (5) et avec l'amortisseur (12).

2. Mécanisme régulateur de débit constant selon la revendication 1, **caractérisé en ce qu'**il comprend des moyens pour fixer la bande (3) au support de bande (4).

3. Mécanisme régulateur de débit constant selon les revendications 1 et 2, **caractérisé en ce que** les moyens pour fixer la bande (3) sur le support de bande (4) comprennent au moins deux éléments de fixation (8).

4. Mécanisme régulateur de débit constant selon l'une quelconque des revendications précédentes, **caractérisé en ce que** les moyens d'activation manuelle de la broche (7) comprennent une tête (15) dans le prolongement de l'arbre longitudinal de la broche (7) vers l'extérieur de la plaque (1) de mécanismes.

5. Mécanisme de régulateur de débit constant selon l'une quelconque des revendications précédentes, **caractérisé en ce que** les moyens de connexion de l'élément d'espacement (5) à la bande (3) comprennent une butée (9) formée par un élargissement incurvé de l'une des extrémités dudit élément d'espacement (5).

6. Mécanisme régulateur de débit constant selon l'une quelconque des revendications précédentes, **caractérisé en ce que** les moyens de connexion de l'élément d'espacement (5) à l'élément multipositionnel (6) comprennent un crochet de fixation (16) formé par l'une des extrémités de l'élément d'espacement (5) lui-même.

7. Mécanisme régulateur de débit constant selon l'une quelconque des revendications précédentes, **caractérisé en ce qu'**il comprend un couvercle de fermeture (13) présentant une graduation (14) ou un indicateur du débit d'air qui passe selon le degré d'ouverture de la vanne.

8. Mécanisme régulateur de débit constant selon la revendication 7, **caractérisé en ce que** le support de bande (4) comprend sur sa face avant des moyens de marquage (19) pour marquer sa position sur la graduation du couvercle de fermeture (13), visibles de l'extérieur.

9. Mécanisme régulateur de débit constant selon l'une quelconque des revendications précédentes, **caractérisé en ce que** le support de bande (4) est en matière plastique.

10. Mécanisme régulateur de débit constant selon l'une quelconque des revendications précédentes, **caractérisé en ce que** la plaque (1) présente une forme rectangulaire.

11. Mécanisme régulateur de débit constant selon l'une quelconque des revendications précédentes, **caractérisé en ce que** l'élément multipositionnel (6) est de nature métallique.

12. Mécanisme régulateur de débit constant selon l'une quelconque des revendications précédentes, **caractérisé en ce que** l'élément d'espacement (5) est de nature métallique.
